(19) Europäisches Patentamt
European Patent Office
Office européen des brevets

(11) **EP 4 622 082 A1**

(12) **EUROPEAN PATENT APPLICATION**
published in accordance with Art. 153(4) EPC

(43) Date of publication:
**24.09.2025 Bulletin 2025/39**

(21) Application number: **23902159.5**

(22) Date of filing: **21.08.2023**

(51) International Patent Classification (IPC):
*H02M 3/335* (2006.01)    *H02M 3/00* (2006.01)
*H02M 1/42* (2007.01)    *H02M 1/088* (2006.01)

(52) Cooperative Patent Classification (CPC):
**H02M 1/088; H02M 1/42; H02M 3/00; H02M 3/335**

(86) International application number:
**PCT/CN2023/114069**

(87) International publication number:
**WO 2024/124950 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.12.2022 CN 202211637016**

(71) Applicant: **Acepower and Technologies Co., Ltd
Shanghai 201206 (CN)**

(72) Inventor: **WANG, Yuetian
Shanghai 201206 (CN)**

(74) Representative: **Slingsby Partners LLP
1 Kingsway
London WC2B 6AN (GB)**

(54) **POWER SUPPLY CIRCUIT AND APPARATUS SUITABLE FOR WIDE-RANGE OUTPUT, SYSTEM AND CONTROL METHOD**

(57)    The present disclosure provides a power supply circuit, a device, a system and a control method suitable for wide-range output. The power supply circuit comprising: a full-bridge LLC topology circuit, a primary circuit of which comprises a first bridge arm and a second bridge arm; the full-bridge LLC topology circuit has a first input voltage greater than a second input voltage thereof, wherein the first input voltage is a voltage at an input end of the first bridge arm, and the second input voltage is a voltage at an input end of the second bridge arm. The power supply circuit suitable for wide-range output according to the embodiments of the present disclosure can achieve an output voltage regulation range of nearly 2 times while maintaining a high efficiency.

FIG. 1

## Description

Technical Field

The present disclosure relates to the technical field of power electronics, particularly to the technical field of power supply topological structures, and more particular to a power supply circuit, a device, a system and a control method suitable for wide-range output.

Background Art

In today's society, with people's attention to the environment and global warming, power electronics technology is developing vigorously, the application scenarios are developing in depth and breadth, and especially two technologies, i.e., LED illumination and a large number of rechargeable mobile devices have developed rapidly.

Summary

However, in the above two technical fields, in order to provide the voltage regulation capability, it is often necessary to greatly sacrifice the efficiency. To sum up, in the prior art, there is a lack of a topological structure which not only improves the voltage regulation capability, but also sacrifices the efficiency slightly.

The present disclosure aims to provide a power supply circuit, a device, a system and a control method suitable for wide-range output. The present disclosure realizes the wide-range output of a power supply and maintains an optimal efficiency of a full-bridge LLC topology circuit.

In order to achieve the above objective, the present disclosure provides a power supply circuit suitable for wide-range output, comprising: a full-bridge LLC topology circuit, a primary circuit of which comprises a first bridge arm and a second bridge arm.

The full-bridge LLC topology circuit has a first input voltage greater than a second input voltage thereof, wherein the first input voltage is a voltage at an input end of the first bridge arm, and the second input voltage is a voltage at an input end of the second bridge arm.

In some embodiments of the present disclosure, the power supply circuit further comprises a PFC circuit and a DC-DC circuit;

an output end of the PFC circuit is connected to an input end of the DC-DC circuit and the input end of the first bridge arm, respectively, and an output end of the DC-DC circuit is connected to the input end of the second bridge arm.

In some embodiments of the present disclosure, a first filter capacitor is provided between the PFC circuit and the DC-DC circuit.

In some embodiments of the present disclosure, a second filter capacitor is provided between the DC-DC circuit and the full-bridge LLC topology circuit.

In some embodiments of the present disclosure, the DC-DC circuit is a step-down DC-DC circuit.

In some embodiments of the present disclosure, a first current detection resistor is connected in series between the PFC circuit and the DC-DC circuit.

In some embodiments of the present disclosure, a second current detection resistor is connected in series between the DC-DC circuit and the full-bridge LLC topology circuit.

The present disclosure further provides a control method for a power supply circuit suitable for wide-range output, comprising:

adjusting a voltage gain of the DC-DC circuit, so that a working frequency of the full-bridge LLC topology circuit is equal to a resonant frequency thereof.

The present disclosure further provides a power supply device suitable for wide-range output, comprising the power supply circuit suitable for wide-range output.

The present disclosure further provides a system suitable for wide-range output, comprising the power supply circuit suitable for wide-range output.

As can be seen from the above descriptions, the embodiments of the present disclosure provide a power supply circuit, a device, a system and a control method suitable for wide-range output. The power supply circuit comprising: a full-bridge LLC topology circuit, a primary circuit of which comprises a first bridge arm and a second bridge arm; the full-bridge LLC topology circuit has a first input voltage greater than a second input voltage thereof, wherein the first input voltage is a voltage at an input end of the first bridge arm, and the second input voltage is a voltage at an input end of the second bridge arm. The power supply circuit, the device, the system and the control method suitable for wide-range output according to the present disclosure can simultaneously achieve a wide voltage regulation range and a high efficiency.

In order that the above and other objectives, characteristics and advantages of the present disclosure can be more readily understood, the preferred embodiments are described in detail below with reference to the drawings.

Brief Description of the Drawings

In order to explain the technical solutions in the embodiments of the present disclosure or in the prior art more clearly, the drawings to be used the description of the embodiments or the prior art will be briefly introduced below. Obviously, the drawings in the following description only illustrate some embodiments of the present disclosure, and those of ordinary skill in the art can obtain other drawings from them without paying any creative effort.

FIG. 1 illustrates a logical structure diagram of a power supply circuit suitable for wide-range output according to an embodiment of the present disclosure;

FIG. 2 illustrates a working principle diagram of a power supply circuit suitable for wide-range output according to an embodiment of the present disclosure;

FIG. 3 illustrates a logical structure diagram (Buck circuit) of a power supply circuit suitable for wide-range output according to an embodiment of the present disclosure;

FIG. 4 illustrates schematic diagram 1 of a Buck circuit according to an embodiment of the present disclosure;

FIG. 5 illustrates schematic diagram 2 of a Buck circuit according to an embodiment of the present disclosure;

FIG. 6 illustrates a flowchart of a control method for a power supply device suitable for wide-range output according to an embodiment of the present disclosure; and

FIG. 7 illustrates a flowchart of step 100 in a control method for a power supply device suitable for wide-range output according to an embodiment of the present disclosure.

Detailed Description of the Preferred Embodiments

The technical solutions in the embodiments of the present disclosure will be clearly and completely described below with reference to the drawings for the embodiments of the present disclosure. Obviously, those described are only a part, rather than all, of the embodiments of the present disclosure. Based on the embodiments in the present disclosure, any other embodiment obtained by those of ordinary skill in the art without paying any creative effort should fall within the protection scope of the present disclosure.

With reference to the following description and the drawings, particular embodiments of the present disclosure are disclosed in detail, and the ways in which the principle of the present disclosure can be adopted are pointed out. It should be understood that the embodiments of the present disclosure are not limited in scope thereby. The embodiments of the present disclosure include many changes, modifications and equivalents within the spirit and the scope of the appended claims.

Features described and/or illustrated for one embodiment may be used in one or more other embodiments in the same or similar way, may be combined with features in other embodiments, or may take place of features in other embodiments.

It should be emphasized that the term "comprise/include" when used herein refers to the presence of a feature, an integer, a step or a component, but does not exclude the presence or addition of one or more other features, integers, steps or components.

The LED illumination driver and the lithium battery charger have a common characteristic, i.e., under different working conditions, the output voltage is variable within a range of about 2 times. In these two subdivided technical fields, the power of a singular device is generally not high, and a flyback converter is widely used by technicians in the industry because the flyback converter has a strong voltage regulation capability. However, with the increasing power of the singular device, the disadvantages of the flyback converter gradually appear, especially the transformer volume is too large, and the efficiency cannot be compared with the full-bridge LLC resonant converter topology circuit widely used in the industry at present. But the full-bridge LLC topology circuit in the prior art also has its own defects. Specifically, although the transformer of the full-bridge LLC topology circuit lower requirements and higher efficiency than the flyback converter under the same power level, the voltage regulation capability of the full-bridge LLC topology circuit is weak, and its efficiency needs to be greatly sacrificed in order to improve the voltage regulation capability.

Specifically, for the high-power LED driver and the lithium battery charger, there are the following three methods in the prior art for power external amplification:

(1) PFC circuit + flyback converter;
(2) PFC circuit + full-bridge LLC topology circuit;
(3) PFC circuit + full-bridge LLC topology circuit + Buck circuit.

In which, the voltage regulation range of the first method can be easily achieved, but due to the limitation of the transformer volume of the flyback converter, the finished product has a large volume and is inconvenient to carry. It is difficult to achieve the voltage regulation range of the second method, and repeated attempts are needed to optimize the resonance parameters while the efficiency is sacrificed. In the third method, although a high efficiency of the full-bridge LLC topology circuit can be achieved and the voltage regulation is completed by the Buck circuit, the disadvantage is that the energy is subjected to a three-stage conversion and the efficiency is low, while the cost is high because there are three converters cascaded.

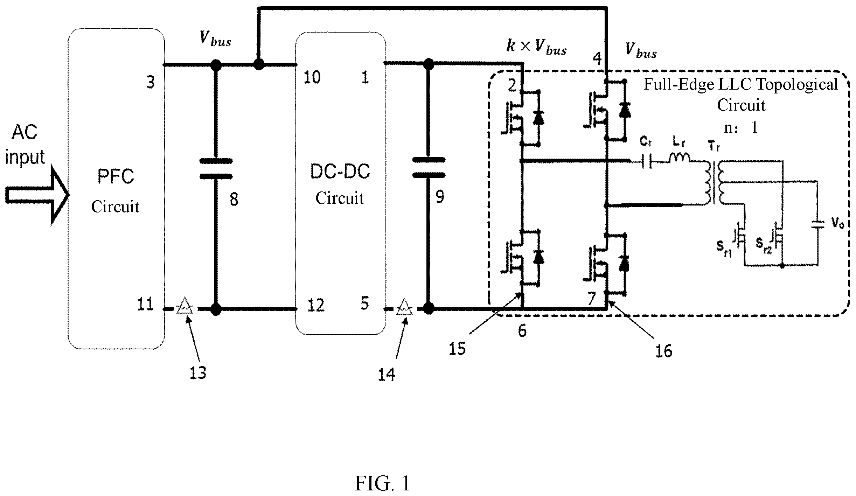

Based on the above technical defects, please refer to FIG. 1. a power supply circuit suitable for wide-range output according to some embodiments of the present disclosure includes:

a full-bridge LLC topology circuit, a primary circuit of which includes a first bridge arm 15 and a second bridge arm 16;
the full-bridge LLC topology circuit has a first input voltage greater than a second input voltage thereof, wherein the first input voltage is a voltage at an input end 4 of the first bridge arm 15, and the second input voltage is a voltage at an input end 2 of the second bridge arm 16.

The control method for the power supply circuit suitable for wide-range output according to the present disclosure can realize an efficiency of nearly a two-stage architecture and a wide-range output of the full-bridge LLC topology circuit.

In some embodiments of the present disclosure, referring to FIG. 1, the power supply circuit suitable for wide-range output further includes a PFC circuit and a DC-DC circuit;

an output end of the PFC circuit is connected to an input end of the DC-DC circuit and the input end of the first bridge arm 15 respectively, and an output end of the DC-DC circuit is connected to the input end of the second bridge arm 16.

Specifically, the PFC circuit is cascaded with the DC-DC circuit and the full-bridge LLC topology circuit in sequence (from left to right in the figure). Specifically, an output positive end 1 of the DC-DC circuit is connected to a positive end 4 of the first bridge arm 15 of the full-bridge LLC topology circuit; an output positive end 3 of the PFC circuit is connected to a positive end 2 of the second bridge arm 16 of the full-bridge LLC topology circuit; and an output negative end 5 of the DC-DC circuit is connected to a negative end 7 of the first bridge arm 15 and a negative end 6 of the second bridge arm 16.

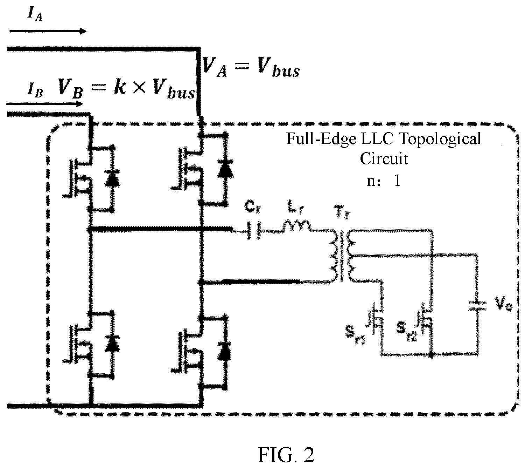

Referring to FIG. 2, the working principle of the above power supply circuit suitable for wide-range output is as follows. The DC-DC circuit has an output positive end voltage of k×Vbus, where k represents a voltage gain of the DC-DC circuit. It is not difficult to understand that the efficiency is the optimal when the full-bridge LLC topology circuit works at its resonance point, and specifically:

when a working frequency of the full-bridge LLC topology circuit is a resonant frequency, the output voltage of the full-bridge LLC topology circuit is:

$$V_o = \frac{V_A + V_B}{2n} = \frac{(1+k)}{2n} V_{bus} \qquad (1)$$

where n represents a turn ratio of a transformer Tr, VO represents an output voltage of the full-bridge LLC topology circuit, VA represents an output voltage of the PFC circuit, i.e., Vbus, and VB represents an output voltage of the DC-DC circuit, i.e., k×Vbus.

Average values of current flowing into the first bridge arm 15 and the second bridge arm 16 of the full-bridge LLC topology circuit are the same, i.e.,

$$I_{A\_ave} = I_{B\_ave} \qquad (2)$$

where $I_{A\_ave}$ and $I_{B\_ave}$ represent average values of current flowing into the first bridge arm 15 and the second bridge arm 16 of the full-bridge LLC topology circuit, respectively.

Thus, a ratio of power flowing through the first bridge arm 15 and the second bridge arm 16 is equal to a ratio of the connected voltages:

$$\frac{P_{A\_ave}}{P_{B\_ave}} = \frac{V_A}{V_B} = \frac{1}{k} \qquad (3)$$

where $P_{A\_ave}$ and $P_{B\_ave}$ represent power of the first bridge arm 15 and the second bridge arm 16 of the full-bridge LLC topology circuit.

As can be seen from Formula (3), if the processing power of the whole topology circuit (including the PFC circuit, the DC-DC circuit and the full-bridge LLC topology circuit) consists of 1+k parts, 1 part thereof is subjected to a two-stage conversion (i.e., the PFC circuit + the full-bridge LLC topology circuit), and k parts thereof is subjected to a three-stage conversion (i.e., the PFC circuit + the DC-DC circuit + the full-bridge LLC topology circuit). Thus, on the whole, only partial energy of the whole power supply circuit is subjected to the three-level conversion, i.e., the power supply circuit suitable for wide-range output according to the present disclosure is a topological architecture of less than three stages, and the efficiency is far better than that of the power supply circuit with a three-stage architecture in the prior art.

On the other hand, as can be seen from Formula (1), the regulation of the output voltage may be achieved by adjusting the voltage gain k of the DC-DC circuit, so that the full-bridge LLC topology circuit can always work at the resonance point (the optimal working point), thereby maintaining the optimal efficiency.

It can be understood that the PFC circuit means a "Power Factor Correction" circuit, and the power factor refers to a relationship between effective power and a total power consumption (apparent power), i.e., a ratio of the effective power to the total power consumption (apparent power). The power factor may be used to substantially measure the extent to which electricity is effectively used, and the power utilization rate increases as the power factor rises. The PFC circuit is an AC-to-DC converter with a function of maintaining an input sinusoidal voltage and input current in a same phase and converting an AC voltage into a DC voltage.

In some embodiments of the present disclosure, the PFC circuit includes an active PFC circuit and a passive PFC circuit. The so-called active PFC circuit is to add a power converter between a rectifier circuit and a load, then apply a current feedback technology to constantly regulate the input current by some appropriate control methods, track the waveform of the input sine-wave voltage, and correct the input current into a sine wave in phase with a grid voltage, so that the power factor can be increased to approximately 1. Since an active device is used in this solution, this process is called an active power factor correction, also known as APFC. That is, measures are taken to the circuit to make the waveform of the input current close to the sine wave and in phase with the input voltage, so that the power factor is approximately 1. In some possible examples, the PFC circuit may include a rectifier circuit and/or a step-up/-step-down circuit.

The DC-DC circuit refers to a switching power supply chip, which uses the energy storage characteristics of capacitors and inductors to perform high-frequency switching actions through a controllable switch (MOSFET, etc.), and stores the input electric energy in the capacitors (inductors). When the switch is opened, the electric energy is released to the load for powering. The capability of outputting power or voltage is related to a duty cycle (a ratio of on-time of the switch to a whole cycle of the switch) and a switching frequency. A switching power supply may be used for voltage step-up or step-down. In some possible examples, the DC-DC circuit may be an isolated DC-DC circuit or a non-isolated DC-DC circuit. In some possible examples, the isolated DC-DC circuit may include a transformer, a primary power switch circuit, a resonant cavity and a secondary rectifier circuit, which is just exemplary, and the isolated DC-DC circuit is not limited thereto. The isolated DC-DC circuit may also be any other type of the DC-DC circuit that is capable of isolation.

As illustrated in FIG. 1, the full-bridge LLC topology circuit consists of four parts: an MOSFET power switch, a resonant cavity, a transformer and a diode rectifier. The MOSFET power switch firstly converts an input DC voltage into a high-frequency square wave that enters the resonant cavity, then the harmonic of the square wave is eliminated by the resonant cavity and a sine wave of a fundamental frequency is output; the sine wave is then transmitted to a secondary side of the converter through a high-frequency transformer, and the voltage is stepped up or down depending on the application requirements; finally, the diode rectifier converts the sine wave into a stable DC output. In which, the diode rectifier may be replaced by a synchronous rectifier tube or a rectifier circuit which is composed of a diode and a synchronous rectifier tube.

The full-bridge LLC topology circuit can maintain a high efficiency even at a very high frequency owing to its resonance characteristic. This characteristic realizes a soft switching function on a primary side and a secondary side at the same time, thereby reducing the switching loss and improving the efficiency. In addition, the full-bridge LLC topology circuit can also save the space of the circuit board because an output inductor is not required. This means that any inductor can be easily integrated into a single magnetic structure, thereby saving the area and cost. When all inductive elements of a circuit are located in a same structure, the electromagnetic compatibility will be greatly improved, because it must be easier and more economical to shield a single structure than three structures.

With continued reference to FIG. 1, in some embodiments of the present disclosure, a first filter capacitor 8 is provided between the PFC circuit and the DC-DC circuit.

A second filter capacitor 9 is provided between the DC-DC circuit and the full-bridge LLC topology circuit.

It should be pointed out that the values of the first filter capacitor 8 and the second filter capacitor 9 are related to the output power of the power supply circuit (i.e., the output power of the full-bridge LLC topology circuit), and those values may be different. As illustrated in FIG. 1, the first filter capacitor 8 filters the voltage output by the PFC circuit for stabilization. Similarly, the second filter capacitor 9 filters the output voltage of the DC-DC circuit for stabilization.

With continued reference to FIG. 1, in some embodiments of the present disclosure, the PFC circuit is specifically cascaded with the DC-DC circuit as follows:

an output positive end 3 of the PFC circuit is connected to an input positive end 10 of the DC-DC circuit; and

an output negative end 11 of the PFC circuit is connected to an input negative end 12 of the DC-DC circuit.

In some embodiments of the present disclosure, the DC-DC circuit is a step-down DC-DC circuit (Buck circuit).

If the DC-DC circuit is selected as a Buck circuit, and the value range of k is (0,1), it can be seen from Formula (1) that the output voltage regulation range is closed to 2, so the power supply device suitable for wide-range output according to the present disclosure can provide an output voltage of about 2 times.

If k is 0, the topological structure is simplified to a two-stage architecture of a PFC circuit and a half-bridge LLC topology circuit.

If k is 1, the topological structure is simplified to a 2.5-stage architecture of an PFC circuit and a full-bridge LLC topology circuit, because one half of the power is subjected to two-stage conversion and the other half of the power is subjected to three-stage conversion. It can be understood that for the LED driver and the lithium battery charger, the corresponding output power increases as the output voltage rises. When the LED driver and the lithium battery charger has a high output voltage and a high output power, k is required to be large and approximately 1. At this time, the efficiency of the corresponding Buck circuit is also high, so that the overall efficiency will be high.

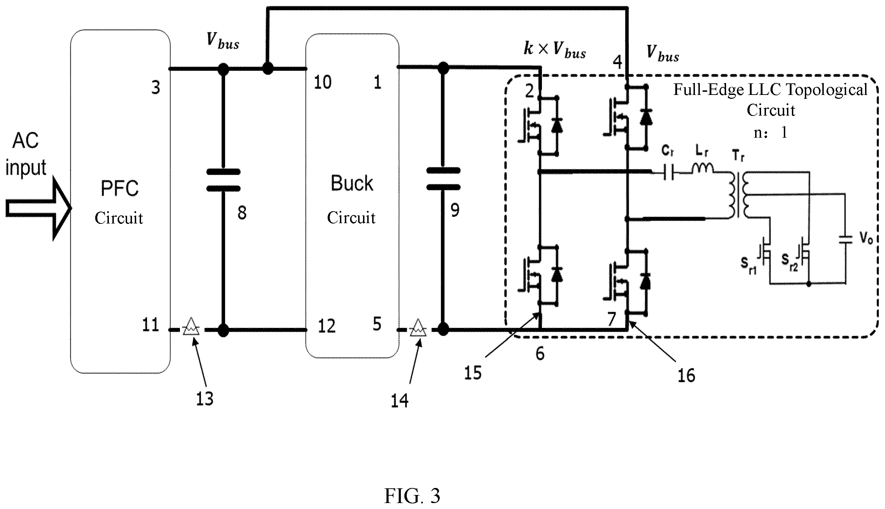

Correspondingly, when the LED driver and the lithium battery charger has a low output voltage and a low output power, k is required to be small. Although the efficiency of the Buck circuit is relatively low at this time, the power extracted from the corresponding bridge arm is relatively small by k/(1+k), and the energy after three-stage conversion accounts for a small proportion of the total energy. Most energy is transmitted to the output end through two-stage conversion (the PFC circuit + the full-bridge LLC topology circuit), so that the efficiency of the Buck circuit has little influence on the overall efficiency. As illustrated in FIG. 3, this topological architecture can achieve an output voltage regulation range of nearly 2 times while maintaining a high efficiency.

To sum up, the power supply device suitable for wide-range output according to the embodiment of the present disclosure can achieve an output voltage regulation range of nearly 2 times while maintaining a high efficiency.

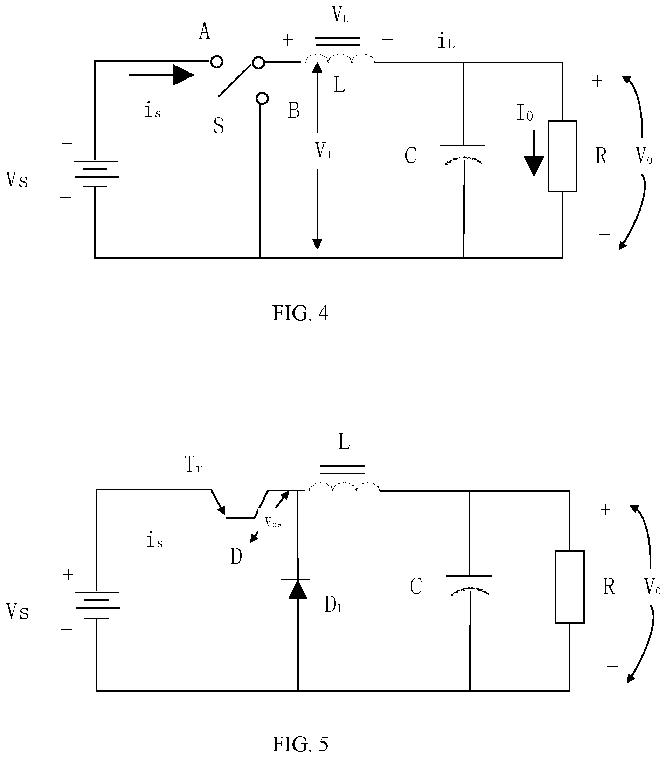

The Buck circuit is also called a step-down converter, a series switching stabilized voltage supply or a three-terminal switching step-down regulator. Referring to FIG. 4, which illustrates a diagram of a Buck circuit composed of a single-pole double-throw switch S, an inductive element L and a capacitor C. FIG. 4 illustrates a diagram of a Buck circuit composed of a transistor Tr, a diode D1, an inductor element L, and a capacitor C which work at a duty cycle of D. The circuit completes a function of converting a DC voltage Vs into a DC voltage Vo.

When the switch S is at position a, current as illustrated in FIG. 5 flows through the inductive element L and linearly increases, current Io flows through a load R, and a voltage Vo is output from both ends and is positive at top and negative at bottom. When is>Io, the capacitor is in a charged state. At this time, the diode D1 bears a reverse voltage; after the lapse of time D1Ts (ton is the time when S is at position a and Ts is a cycle), when the switch S is at position b, as illustrated in FIG. 5, the polarity of a voltage across the coil L will be changed due to a magnetic field in the coil L, so as to maintain current iL unchanged. The voltage across the load R is still positive at the top and negative at the bottom. When iL<Io, the capacitor is in a discharged state, which is conducive to maintaining Io and Vo unchanged. At this time, the diode D1 bears a forward bias and forms a path for the current iL, so D1 is called a freewheeling diode. Since the converter has an output voltage Vo less than a power supply voltage Vs, it is called a step-down converter. Current is is input during working, wherein is>Io when the switch is closed and is=0 when the switch is opened, so is is pulsating, but the output current Io is continuous and stable under the action of L, D1 and C.

In some embodiments of the present disclosure, a first current detection resistor is connected in series between the PFC circuit and the DC-DC circuit, and a second current detection resistor is connected in series between the DC-DC circuit and the full-bridge LLC topology circuit.

Specifically, referring to FIG. 1, a first current detection resistor 13 is connected in series between an output negative end 11 of the PFC circuit and the DC-DC circuit; a second current detection resistor 14 is connected in series between an output negative end 5 of the DC-DC circuit and the full-bridge LLC topology circuit; the first current detection resistor 13 is used to detect the current of the PFC circuit, and the second current detection resistor 14 is used to detect the current of the DC-DC circuit. In some embodiments, the first current detection resistor 13 may be connected in series between the positive output end 3 of the PFC circuit and the DC-DC circuit, and the second current detection resistor 14 may be connected in series between the output positive end 1 of the DC-DC circuit and the full-bridge LLC topology circuit.

The range of the voltage gain of the DC-DC circuit is 0 to 1.

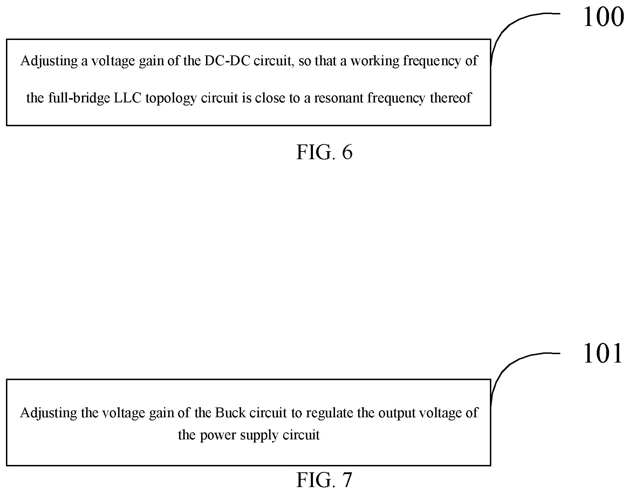

Based on the power supply circuit suitable for wide-range output, the present disclosure further provides a control method for the power supply circuit suitable for wide-range output. Referring to FIG. 6, the method includes:

Step 100: adjusting a voltage gain of the DC-DC circuit, so that a working frequency of the full-bridge LLC topology circuit is close to a resonant frequency thereof.

The resonance frequency means that in a circuit including a capacitor and an inductor (e.g., the full-bridge LLC topology circuit in step 100), when the capacitor and the inductor are connected in parallel, in a short period of time the voltage of the capacitor gradually increases and the current thereof gradually decreases; while the current of the inductor increases and the voltage thereof gradually decreases. In another short period of time, the voltage of the capacitor gradually decreases and the current thereof gradually increases; while the current of the inductor gradually decreases and the voltage thereof gradually increases. The voltage increment may reach a positive maximum value, and the voltage decrement may also reach a negative maximum value. Also, the direction of the current will also change to be positive or negative in this process. This process is called an electric oscillation of the circuit. When a sinusoidal frequency of an external input voltage of the circuit reaches a specific frequency (i.e., the resonant frequency of the circuit), an inductive reactance of the circuit is equal to a capacitive reactance thereof, and the circuit is purely resistive to the outside, which is a resonance. By adjusting the voltage gain k of the DC-DC circuit, the output voltage of the DC-DC circuit can be changed, so that the switching frequency of the full-bridge LLC topology circuit can be maintained near the resonant frequency. A range of the deviation between the working frequency and the resonant frequency of the full-bridge LLC topology circuit may be set according to the actual situation, such as ±3%, ±5%, ± 10%, etc., but present disclosure is not limited thereto.

As can be seen from Formula (3), if the processing power consists of 1+k parts, 1 part thereof is subjected to a two-stage conversion (i.e., the PFC circuit + the full-bridge LLC topology circuit), and k parts thereof is subjected to a three-stage conversion (i.e., the PFC circuit + the DC-DC circuit + the full-bridge LLC topology circuit). Thus, on the whole, only partial energy is subjected to the three-level conversion, i.e., this topology is a topological architecture of less than three stages, and the efficiency is far better than that of the existing three-stage architecture. In addition, it should be noted that the resonant frequency in step 100 is a numerical value. In step 100, by adjusting the voltage gain k of the DC-DC circuit, the working frequency of the full-bridge LLC topology circuit can be maintained near the resonant frequency, i.e., a threshold range (including the resonant frequency) may be set so that the working frequency of the full-bridge LLC topology circuit can be maintained within the threshold range by adjusting the voltage gain k of the DC-DC circuit.

In some embodiments of the present disclosure, referring to FIGS. 3 and 7, the DC-DC circuit is a Buck circuit; and step 100 includes:

step 101: adjusting the voltage gain of the Buck circuit to regulate the output voltage of the power supply circuit.

As can be seen from Formula, the regulation of the output voltage may be achieved by adjusting the voltage gain k of the DC-DC circuit, so that the full-bridge LLC topology circuit can always work at the resonance point (the optimal working point), thereby maintaining the optimal efficiency.

In some embodiment of the present disclosure, the voltage gain of the Buck circuit ranges from 0 to 1.

Referring to the dashed box in FIG. 1, the input voltages of the two bridge arms of the full-bridge LLC topology circuit may be different, and the full-bridge LLC topology circuit keeps its working state unchanged. By adjusting the voltage of one of the bridge arms, i.e., the value of k, the LLC output can be adjusted, thereby realizing the wide-range LLC output. The topological structure has the following characteristics: the power borne by each bridge arm is proportional to the input voltage thereof. When k is 0, it is exactly the case of a half-bridge LLC topology circuit, and when k is 1, it is exactly the case of a full-bridge LLC topology circuit.

In conjunction with the power supply method suitable for wide-range output according to the embodiment of the present disclosure, compared with the three-stage open-range output architecture in the prior art, the topological structure has the characteristic of high efficiency: when the DC-DC circuit is a step-down (e.g., Buck) converter, the value range of k is 0 to 1;

The regulation of the output voltage is achieved by adjusting the voltage gain k of the DC-DC circuit, so that the full-bridge LLC topology circuit always works at the optimal working point, thereby maintaining a high efficiency.

To sum up, regardless of the value of the voltage gain k of the DC-DC circuit (the value of k of the step-down DC-DC circuit (Buck circuit) is 0 to 1), at least half of the energy (in a ratio of $\frac{1}{1+k}$) is converted to the output end through the two-stage conversion of the PFC circuit and the DC-DC circuit, so the efficiency will be higher than the case where the energy is subjected to the three-stage conversion of the PFC circuit, the DC-DC circuit and the full-bridge LLC topology circuit.

Specifically, when the value of the voltage gain k of the DC-DC circuit is large, i.e., the full-bridge LLC topology circuit has a high output voltage and a high output power, the corresponding DC-DC circuit also has a high efficiency, so the overall efficiency of the power supply circuit will be high. On the other hand, when the value of the voltage gain k of the DC-DC circuit is small, i.e., the full-bridge LLC topology circuit has a low output voltage and a low output power, the power extracted by the DC-DC circuit from the corresponding bridge arm (the second bridge arm 16 in FIG. 1) is low ($\frac{k}{1+k}$ of the total power of the power supply circuit), and the DC-DC circuit has little influence on the overall efficiency of the power supply circuit. Therefore, the control method for the power supply circuit suitable for wide-range output according to the present disclosure can realize an efficiency of nearly a two-stage architecture and a wide-range output of the full-bridge LLC topology circuit.

Based on the same inventive concept, the embodiments of the present disclosure further provide a power supply device suitable for wide-range output, including the power supply circuit suitable for wide-range output, and a system suitable for wide-range voltage output, including the power supply circuit suitable for wide-range output.

Since the principles for the power supply device suitable for wide-range output and the system suitable for wide-range output to solve the problem are similar to that for the power supply circuit suitable for wide-range output, for the implementations of the power supply device suitable for wide-range output and the system suitable for wide-range output, please refer to the implementation of the power supply circuit suitable for wide-range output, and the repeated content will be omitted. The system suitable for wide-range voltage output further includes a processor configured to output a first control signal according to an acquisition signal, a preset instruction or a dynamic instruction in the power supply circuit suitable for wide-range output, to adjust the voltage gain k of the DC-DC circuit, so that the power supply circuit suitable for wide-range output always works in an optimal working state and maintains a high efficiency. The processor is further configured to output a second control signal according to the acquisition signal, the preset instruction or the dynamic instruction in the power supply circuit suitable for wide-range output, so that the LLC circuit can work at a resonant frequency or an optimal working frequency.

It should be noted that herein, relational terms such as "first" and "second" are only used to distinguish one entity or operation from another entity or operation, and do not necessarily require or imply that there is any such actual relationship or sequence between these entities or operations. Moreover, the term "comprise", "include" or any other variation thereof is intended to cover non-exclusive inclusion, so that a process, a method, an article or a device comprising a series of elements comprise not only those elements, but also other elements not explicitly listed, or further comprise inherent elements of such process, method, article or device. In a case where there is no further limitation, an element defined by a sentence 'comprising a ...' does not exclude other identical elements existing in the process, method, article or device comprising the element. The orientations or positional relationships indicated by the terms "upper", "lower", etc., are based on those illustrated in the drawings, and are only for the convenience of describing the present disclosure and simplifying the description, rather than indicating or implying that a device or element referred to must have a specific orientation, or be configured and operated in a specific orientation, and should not be construed as limitations to the present disclosure. Unless otherwise specified and limited, the term such as "installation" or "connection" should be broadly understood, and for example may be a fixed connection, a detachable connection, an integral connection, a mechanical connection, an electrical connection, a direct connection, an indirect connection through an intermediary, or an internal communication between two elements. For those skilled in the art, the specific meanings of the above terms in the present disclosure can be understood according to the specific circumstances.

The embodiments herein are all described in a progressive manner, and the same or similar portions of the embodiments can refer to each other. Each embodiment lays an emphasis on its distinctions from other embodiments. In the description of the present disclosure, the description of the reference terms "one embodiment", "some embodiments", "an example", "a specific example", "some examples" and the like mean that the specific features, structures, materials, or characteristics described in conjunction with the embodiment(s) or example(s) are included in at least one embodiment or example of the present disclosure. In the present disclosure, the schematic expressions of the above terms do not necessarily aim at the same embodiment or example. Moreover, the specific features, structures, materials, or characteristics described may be combined in any one or more embodiments or examples in a suitable manner. In addition, those skilled in the art can combine different embodiments or examples described in the present disclosure and the features thereof if there is no contradiction.

In the present disclosure, specific embodiments are adopted to set forth the principle and the implementations of the present disclosure, and those embodiments are only described to help the understanding of the method and the core idea of the present disclosure. Meanwhile, those of ordinary skill in the art can make changes in the implementations and the application scope according to the idea of the present disclosure. To sum up, the contents herein should not be understood as limitations to the present disclosure.

## Claims

1. A power supply circuit suitable for wide-range output, comprising: a full-bridge LLC topology circuit, a primary circuit of which comprises a first bridge arm and a second bridge arm;
   the full-bridge LLC topology circuit has a first input voltage greater than a second input voltage thereof, wherein the first input voltage is a voltage at an input end of the first bridge arm, and the second input voltage is a voltage at an input end of the second bridge arm.

2. The power supply circuit according to claim 1, further comprising a PFC circuit and a DC-DC circuit;
   an output end of the PFC circuit is connected to an input end of the DC-DC circuit and the input end of the first bridge arm, respectively, and an output end of the DC-DC circuit is connected to the input end of the second bridge arm.

3. The power supply circuit according to claim 1, wherein,
   a first filter capacitor is provided between the PFC circuit and the DC-DC circuit.

4. The power supply circuit according to claim 1, wherein,
   a second filter capacitor is provided between the DC-DC circuit and the full-bridge LLC topology circuit.

5. The power supply circuit according to any of claims 2 to 4, wherein the DC-DC circuit is a step-down DC-DC circuit.

6. The power supply circuit according to claim 2, wherein a first current detection resistor is connected in series between the PFC circuit and the DC-DC circuit.

7. The power supply circuit according to claim 2, wherein a second current detection resistor is connected in series between the DC-DC circuit and the full-bridge LLC topology circuit.

8. A control method for the power supply circuit suitable for wide-range output according to any of claims 1 to 7, comprising:
   adjusting a voltage gain of the DC-DC circuit, so that a working frequency of the full-bridge LLC topology circuit is equal to a resonant frequency thereof.

9. A power supply device suitable for wide-range output, comprising the power supply circuit suitable for wide-range output according to any of claims 1 to 7.

10. A system suitable for wide-range output, comprising the power supply circuit suitable for wide-range output according to any of claims 1 to 7.

EP 4 622 082 A1

FIG. 1

FIG. 2

FIG. 3

EP 4 622 082 A1

FIG. 4

FIG. 5

100

Adjusting a voltage gain of the DC-DC circuit, so that a working frequency of the full-bridge LLC topology circuit is close to a resonant frequency thereof

FIG. 6

101

Adjusting the voltage gain of the Buck circuit to regulate the output voltage of
the power supply circuit

FIG. 7

## INTERNATIONAL SEARCH REPORT

| International application No. |
|---|
| **PCT/CN2023/114069** |

**A.     CLASSIFICATION OF SUBJECT MATTER**

H02M 3/335(2006.01)i;  H02M 3/00(2006.01)i;  H02M 1/42(2007.01)i;  H02M 1/088(2006.01)i

According to International Patent Classification (IPC) or to both national classification and IPC

**B.     FIELDS SEARCHED**

Minimum documentation searched (classification system followed by classification symbols)

IPC: H02M

Documentation searched other than minimum documentation to the extent that such documents are included in the fields searched

Electronic data base consulted during the international search (name of data base and, where practicable, search terms used)

CNTXT; CNABS; DWPI; WPABS; WPABSC; ENTXTC; USTXT; CNKI; IEEE: 全桥, 谐振, 桥臂, 功率因数校正, 调压, 增益, 效率, full bridge, resonan+, bridge arm, PFC, voltage regulat+, gain, efficiency, LLC

**C.     DOCUMENTS CONSIDERED TO BE RELEVANT**

| Category* | Citation of document, with indication, where appropriate, of the relevant passages | Relevant to claim No. |
|---|---|---|
| PX | CN 115811235 A (SHANGHAI ANSHIBO ENERGY TECHNOLOGY CO., LTD.) 17 March 2023 (2023-03-17)<br>claims 1-10, description, paragraphs 0031-0092, and figures 1-7 | 1-10 |
| PX | CN 116155111 A (HARBIN INSTITUTE OF TECHNOLOGY) 23 May 2023 (2023-05-23)<br>description, paragraphs 0041-0074, and figures 1-15 | 1-10 |
| X | CN 114465476 A (YANGZHOU HAITONG ELECTRONICS CO., LTD.) 10 May 2022 (2022-05-10)<br>description, paragraphs 0024-0054, and figures 1-5 | 1-10 |
| X | CN 107437892 A (HUAWEI TECHNOLOGIES CO., LTD.) 05 December 2017 (2017-12-05)<br>description, paragraphs 0074-0144, and figures 1-3 | 1-10 |
| X | CN 114070083 A (HUAWEI TECHNOLOGIES CO., LTD.) 18 February 2022 (2022-02-18)<br>description, paragraphs 0054-0153, and figures 1-6 | 1-10 |
| A | FR 3089721 A1 (RENAULT S.A.S et al.) 12 June 2020 (2020-06-12)<br>entire document | 1-10 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 October 2023** | **09 November 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/114069**

| Patent document cited in search report | | | Publication date (day/month/year) | Patent family member(s) | | | Publication date (day/month/year) |
|---|---|---|---|---|---|---|---|
| CN | 115811235 | A | 17 March 2023 | None | | | |
| CN | 116155111 | A | 23 May 2023 | None | | | |
| CN | 114465476 | A | 10 May 2022 | None | | | |
| CN | 107437892 | A | 05 December 2017 | CN | 107437892 | B | 03 April 2020 |
| CN | 114070083 | A | 18 February 2022 | None | | | |
| FR | 3089721 | A1 | 12 June 2020 | FR | 3089721 | B1 | 17 September 2021 |

Form PCT/ISA/210 (patent family annex) (July 2022)